(19) Europäisches Patentamt
European Patent Office
Office européen des brevets

(11) **EP 4 488 500 A2**

(12) **EUROPEAN PATENT APPLICATION**

(43) Date of publication:
08.01.2025 Bulletin 2025/02

(51) International Patent Classification (IPC):
**F02C 7/224** *(2006.01)*

(21) Application number: **24214664.5**

(22) Date of filing: **19.11.2021**

(52) Cooperative Patent Classification (CPC):
**F02C 7/224; F02C 3/22; F23R 3/36;** F02C 6/18;
F23R 2900/00002; Y02E 60/36; Y02T 50/678

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.11.2020 US 202016953661**

(62) Document number(s) of the earlier application(s) in
accordance with Art. 76 EPC:
**21209410.6 / 4 001 617**

(71) Applicant: **RTX Corporation
Farmington, CT 06032 (US)**

(72) Inventors:
• **COCKS, Peter**
**South Glastonbury, 06073 (US)**
• **SMITH, Lance L.**
**West Hartford, 06117 (US)**

(74) Representative: **Dehns**
**10 Old Bailey**
**London EC4M 7NG (GB)**

Remarks:
This application was filed on 21.11.2024 as a
divisional application to the application mentioned
under INID code 62.

(54) **ENGINE USING CRACKED AMMONIA FUEL**

(57) A gas turbine engine includes a cracking device (70) that is configured to decompose a portion of an ammonia flow into a flow of component parts of the ammonia flow, a thermal transfer device that is configured to heat the ammonia flow to a temperature above 500 °C (932 °F), a combustor (46) that is configured to receive and combust the flow of component parts of the ammonia flow to generate a high energy gas flow (64), a compressor section (44) that is configured to supply compressed air to the combustor (46), and a turbine section (48) in flow communication with the high energy gas flow (64) produced by the combustor (46) and mechanically coupled to drive the compressor section (44).

FIG.1

**EP 4 488 500 A2**

**Description**

**BACKGROUND**

A gas turbine engine typically mixes a carbon-based fuel with air within a combustor where it is ignited to generate a high-energy exhaust gas flow. The high-energy exhaust gas flow includes carbon that is eventually exhausted into the environment. Alternative engine structures and fuels may aid in the reduction and/or elimination of carbon emissions. One such alternative fuel is ammonia.

Turbine engine manufacturers continue to seek further improvements to engine performance including improvements to reduce environmental impact while improving propulsive efficiencies.

**SUMMARY**

According to an aspect of the disclosure, there is provided a gas turbine engine including a cracking device that is configured to decompose a portion of an ammonia flow into a flow of component parts of the ammonia flow, a thermal transfer device that is configured to heat the ammonia flow to a temperature above 500 °C (932 °F), a combustor that is configured to receive and combust the flow of component parts of the ammonia flow to generate a high energy gas flow, a compressor section that is configured to supply compressed air to the combustor, and a turbine section in flow communication with the high energy gas flow produced by the combustor and mechanically coupled to drive the compressor section.

In a further embodiment of the foregoing, the gas turbine engine further includes a pump that is configured to increase a pressure of the ammonia flow to a pressure above 5 atm (74 psi) at the cracking device.

In a further embodiment of the foregoing, the ammonia flow is communicated to the cracking device at a pressure between 5 atm (74 psi) and 300 atm (4410 psi).

In a further embodiment of the foregoing, the ammonia flow is heated to a temperature at a temperature between 500 °C (935 °F) and 700 °C (1292 °F).

In a further embodiment of the foregoing, the ammonia flow is heated to a temperature at a temperature above 700 °C (1292 °F).

In a further embodiment of the foregoing, the flow of component parts includes Hydrogen ($H_2$) and Nitrogen ($N_2$).

In a further embodiment of the foregoing, the thermal transfer device includes an exhaust heat exchanger that provides thermal communication between the ammonia flow and exhaust heat from the turbine section.

In a further embodiment of the foregoing, the thermal transfer device includes a compressor heat exchanger that provides thermal communication between the ammonia flow and compressed air from a last stage of the compressor section.

In a further embodiment of the foregoing, the compressed air from a last stage of the compressor section that is in thermal communication with the ammonia is subsequently in thermal communication with the combustor to provide combustor cooling.

In a further embodiment of the foregoing, the compressed air from a last stage of the compressor section that is in thermal communication with the ammonia is subsequently in thermal communication with the turbine to provide combustor cooling.

In a further embodiment of the foregoing, the thermal transfer device includes a compressor heat exchanger that provides thermal communication between the ammonia flow and compressor air from an intermediate stage of the compressor section.

In a further embodiment of the foregoing, the thermal transfer device includes a combustor heat exchanger that provides thermal communication from cooling air after it has cooled the combustor.

In a further embodiment of the foregoing, the thermal transfer device includes a combustor heat exchanger that provides thermal communication from cooling air after it has cooled the turbine.

In a further embodiment of the foregoing, the thermal transfer device heats the ammonia flow prior to entering the cracking device.

In a further embodiment of the foregoing, the thermal transfer device heats the ammonia flow in the cracking device.

In a further embodiment of the foregoing, the gas turbine engine further includes a turboexpander that receives the ammonia flow and the flow of component parts from the cracker. The ammonia flow and the flow of component parts are expanded through the turboexpander to drive a mechanical output.

According to an aspect of the disclosure, there is provided a fuel system for a gas turbine engine including a fuel storage device that is configured to store an ammonia fuel, a pump that is configured to increase a pressure of the ammonia flow to a pressure above 5 atm (74 psi), a thermal transfer device that is configured to heat the ammonia flow to a temperature above 500 °C (932 °F), and a cracking device that is configured for decomposing a portion of an ammonia flow into a flow that contains more Hydrogen ($H_2$) and Nitrogen ($N_2$) than ammonia ($NH_3$) and communicates the flow that contains more Hydrogen ($H_2$) and Nitrogen ($N_2$) than ammonia ($NH_3$) to a combustor.

In a further embodiment of the foregoing, the pump increases a pressure of the ammonia flow that is communicated to the cracking device to between 5 atm (74 psi) and 300 atm (4410 psi).

In a further embodiment of the foregoing, the thermal transfer device heats the ammonia to a temperature at a temperature between 500 °C (935 °F) and 700 °C (1292 °F).

In a further embodiment of the foregoing, the thermal transfer device heats the ammonia flow to a temperature above 700 °C (1292 °F).

According to an aspect of the disclosure, there is provided a method of operating an energy extraction system including raising a pressure of an ammonia flow to a pressure above 5 atm (74 psi), heating the ammonia flow to a temperature above 500 °C (932 °F) with a thermal transfer device, decomposing an ammonia fuel flow with a cracking device into a flow that contains more Hydrogen ($H_2$) and Nitrogen ($N_2$) than ammonia ($NH_3$), and communicating the flow that contains more $H_2$ and $N_2$ to a combustor that is configured to generate a high energy gas flow.

In a further embodiment of the foregoing, the pressure is raised to between 5 atm (74 psi) and 300 atm (4410 psi).

In a further embodiment of the foregoing, the thermal transfer device heats the ammonia to a temperature between 500 °C (935 °F) and 700 °C (1292 °F).

In a further embodiment of the foregoing, the thermal transfer device heats the ammonia flow to a temperature above 700 °C (1292 °F).

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

**BRIEF DESCRIPTION OF THE DRAWINGS**

Figure 1 is a schematic view of an example gas turbine engine embodiment.
Figure 2 is a graph illustrating a conversion percentage for a pressure or a temperature.
Figure 3 is a schematic view of an example cracker assembly embodiment.
Figure 4 is a schematic view of another example cracker assembly embodiment.
Figure 5 is a schematic view of yet another example cracker assembly embodiment.

**DETAILED DESCRIPTION**

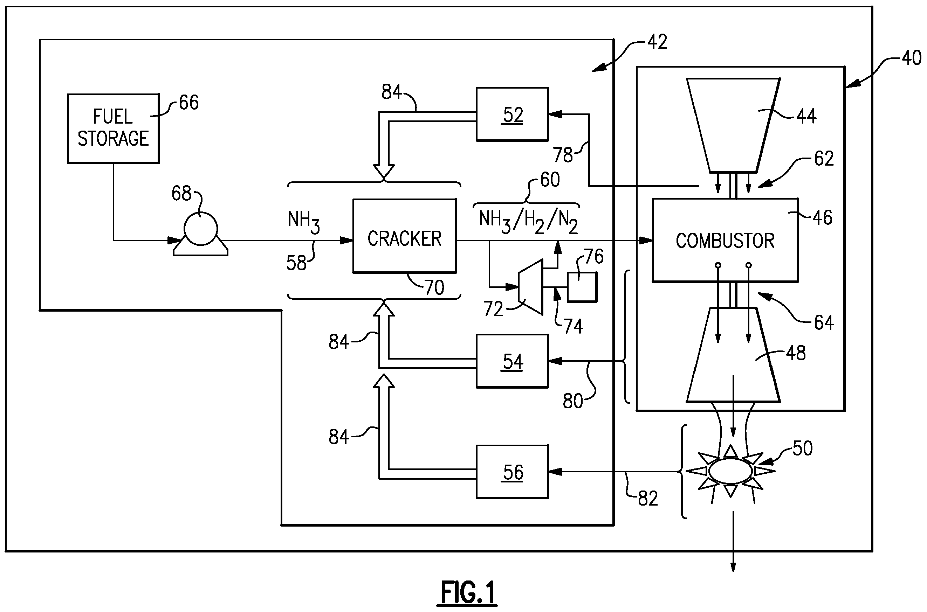

Figure 1 schematically illustrates an example alternate fueled turbine engine assembly 40. The engine assembly 40 uses an ammonia-based fuel flow 60 mixed with a core gas flow 62 in a combustor 46 to generate a high energy gas flow 64 that expands through a turbine section 48 to drive a compressor section 44. It should be appreciated, that the engine 40 is shown schematically and that other structures and engine configurations such as 2-spool, 3-spool and geared turbofan engines would benefit from this disclosure and are within the contemplation and scope of this disclosure. Moreover, a land-based turbine engine would also benefit from application of the features of this disclosure. The disclosed ammonia-based fuel comprises decomposition products of ammonia ($NH_3$) and/or a mixture of ammonia ($NH_3$) and the decomposition products provided by a fuel system 42.

Ammonia ($NH_3$) does not contain carbon, but does have a fuel energy similar to alcohols such as methanol. Ammonia can also be transported and stored in liquid form at moderate pressure and temperature. For example, ammonia is a liquid at a pressure of about 8.5 atm (125 psi) and a temperature of 20 °C (68 °F). Alternatively, ammonia is a liquid at a pressure of 1 atm and a temperature of -33 °C (-27 °F). Moreover, because ammonia does not contain carbon it may be heated to temperatures above that of a hydrocarbon fuel without forming carbon deposits on portions of a fuel system. The increased temperature capabilities of ammonia provide an increased heat sink capacity that can improve engine efficiency. Ammonia can be decomposed into hydrogen and nitrogen component parts. Hydrogen provides improved combustion properties and a desirable clean burning fuel that does not generate undesirable exhaust products. Additionally, removal of nitrogen from the ammonia can reduce nitrous oxide emissions.

The disclosed fuel system 42 uses heat to decompose a flow of ammonia fuel 58 into mostly component parts of hydrogen and nitrogen. The component parts of hydrogen and nitrogen along with residual ammonia are communicated to the combustor 46 to produce the high energy gas flow 64.

The ammonia fuel 58 is stored in a fuel storage tank 66 and pressurized by a fuel pump 68 to a higher level for communication into the combustor 46. The pressurized ammonia fuel flow 58 is communicated to a cracker assembly 70 for decomposition into the component parts of hydrogen and nitrogen. The decomposition process utilizes thermal energy that is drawn from locations on the engine 40.

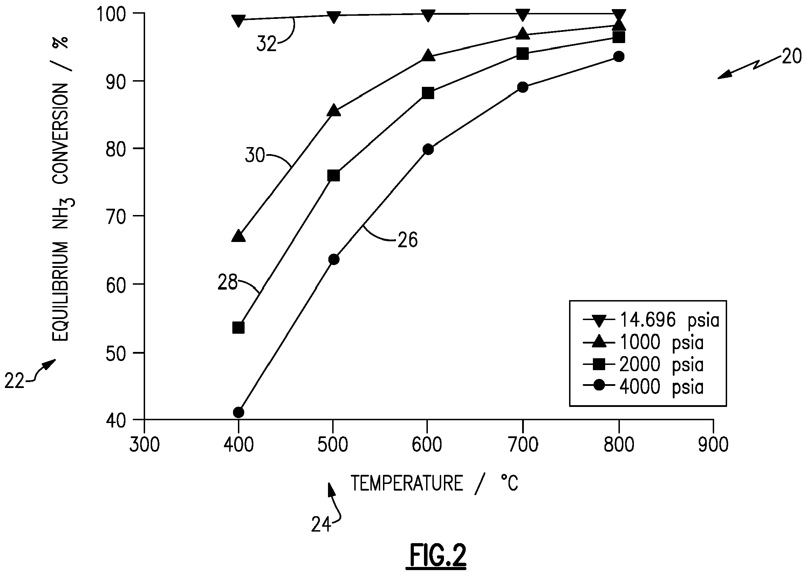

Referring to Figure 2, with continued reference to Figure 1, the decomposition or conversion process of ammonia into component parts of hydrogen and nitrogen can reach an equilibrium point shown at 22 based on a temperature indicated at 24 and pressure indicated by lines 26, 28, 30 and 32. Decomposition or conversion progresses toward the equilibrium value in the presence of a catalyst that sufficiently promotes the reaction with enough heat supplied for the reaction to proceed. At very low pressures, a very high percentage of ammonia can be converted into hydrogen and nitrogen in the cracker assembly 70 as indicated at 32. The percentage of ammonia converted into component parts at pressures around 1 atm (14 psi) can approach 100% at temperatures above around 300 °C (572 °F). However, higher pressures are needed to communicate the components of the fuel into the combustor 46.

The degree of conversion decreases as the pressure of the ammonia fuel increases, as is shown by graph 20. At pressures of around 68 atm (1000 psi), the degree of conversion is reduced to below 70% at 400 °C as is indicated at 30. The degree of conversion at the same pressure increases with an increase in temperature. In this example, the conversion increases to over 80% at temperatures above around 500 °C. Higher pressures require higher temperatures to achieve conversions above 80%. At a pressure of 136 atm (2000 psi), the temperature needed to achieve 80% conversion exceeds 500 °C (932 °F) as indicated by line 28. At a pressure of 272 atm (4000 psi), indicated by line 26, the temperature needed to achieve 80% conversion exceeds 600 °C (1112 °F). The example fuel system 42 uses thermal energy from the engine 40 to elevate the temperature of the ammonia fuel flow in view of the pressure required to generate the desired degree of decomposition.

Thermal energy is drawn from various heat sources including heat producing engine systems as is schematically shown at 78, 80 and 82 in Figure 1. The heat drawn from the various heat sources is communicated to the cracker assembly 70 as is indicated by arrows 84 to aid and encourage the cracking and decomposition process.

In the disclosed example embodiment, heat is drawn from at least one of several locations within the engine assembly 40. Heat from each location is communicated through a thermal transfer device such as schematically shown heat exchangers 52, 54 and 56. In this example, the heat exchanger 52 draws heat from the core airflow 62 after an intermediate or final stage of the compressor section 44, and may draw heat from all or a portion of the core airflow. Cooled air exiting heat exchanger 52 may be delivered as cooling air to engine components such as the combustor or turbine, or to portions of these components. The heat exchanger 54 draws heat from cooling airflow that has been heated after being used to cool portions of the combustor 46 and the turbine section 48. Cooling airflow accepts heat from combustor 46 and parts of the turbine section 48 and therefore becomes heated. At least a portion of this now heated cooling airflow is utilized to heat the ammonia fuel flow 58. The heat exchanger 56 draws thermal energy from gases exiting an intermediate or final stage of the turbine, or from gases exhausted through a nozzle 50.

The heat exchangers 52, 54 and 56 are schematically shown and can be of different configurations based on the location and source of heat, can be located inside or outside the engine, and can be located within or outside the core flow path. The heat exchangers, 52, 54 and 56 may be air/fuel heat exchangers that place the heated airflow into thermal communication with the ammonia fuel flow 58. The heat exchangers may be integral with one or more engine components; for example, ammonia may pass through a turbine vane to cool the vane and extract heat from the core flow. The example heat exchangers 52, 54 and 56 may also include an intermediate thermal transfer medium to communicate thermal energy from the heat source to the ammonia fuel 58. Moreover, although several example heat source locations are disclosed by way of example, other heat source locations within the engine 40 could be utilized and are within the contemplation of this disclosure.

The cracker assembly 70 uses the heat 84 communicated from the example heat sources 62, 64, and 50 in the presence of a catalyst to thermally decompose the ammonia fuel flow 58. The higher heat energy aids decomposition of the ammonia fuel flow 58 depending on the pressure. The catalyst may be a nickel and/or nickel alloy material, iron, ruthenium, or any other catalytic material that provides for the decomposition of ammonia. The decomposition of the ammonia fuel into hydrogen and nitrogen occurs according to the chemical equation:

$$\mathrm{NH_3} \rightarrow \tfrac{1}{2}\mathrm{N_2} + 3(\tfrac{1}{2}\,\mathrm{H_2})$$

Depending upon the final temperature and pressure and the rate of decomposition in the presence of a catalyst, all of the ammonia or some portion of the ammonia may become cracked to form nitrogen and hydrogen. In one example embodiment, the ammonia fuel flow 58 is elevated to a temperature above 500 °C (932 °F) either before the cracking assembly 70 or within the cracking assembly 70. In another disclosed embodiment, the ammonia fuel flow 58 is elevated to a temperature between 500 °C (932 °F) and 700 °C (1292 °F) either before the cracking assembly 70 or within the cracking assembly 70. In still another disclosed embodiment, the ammonia fuel flow 58 is elevated to a temperature above 700 °C (1292 °F) either before the cracking assembly 70 or within the cracking assembly 70. It should be understood that the above temperatures are provided as examples and that other temperature ranges could be utilized within the contemplation of this disclosure. The example temperatures provide for cracking of the ammonia fuel flow 58 into component parts of hydrogen and nitrogen at levels that provide desired combustion properties and performance.

The pump 68 elevates pressure of the ammonia fuel 58 for communication to the combustor 46. The pressure of the ammonia fuel 58 can be adjusted depending on engine operating conditions and available thermal energy to provide desired combustor operation. In one disclosed embodiment, the ammonia fuel 58 is pressurized to at least 5 atm (74 psi) at the cracking device 70. In another disclosed embodiment, the ammonia fuel is pressurized to between 5 atm (73 psi) and 300 atm (4410 psi) at the cracking device 70. The pressure of the ammonia fuel flow 58 may be more prior to entering the cracking device 70 to accommodate pressure drops encountered within the cracker assembly 70, or in other components between the cracker and the combustor such as a turbo-expander. Moreover, the pressure within the cracking assembly 70 may be higher or different to provide a desired final pressure of the component fuel flow 60 for communication into the combustor 46.

Because the cracking process is endothermic, the cracked fuel including hydrogen and nitrogen has increased fuel chemical energy and can therefore provide increased engine work output or thrust output without increased fuel flow and thereby improves engine fuel efficiency. The cracking process is endothermic and therefore additional heat absorption capacity becomes available at a given fuel temperature, thereby providing greater heat absorption before the fuel temperature approaches the temperature of the heat source.

The cracking process increases the number of moles, with one mole of ammonia $NH_3$ becoming two moles of cracked gas, per $NH_3 \rightarrow \frac{1}{2} N_2 + 3(\frac{1}{2} H_2)$, the resulting cracked gas occupies more volume and can provide more work output.

A turbo-expander 72 may be provided to receive a portion of the component fuel flow 60 to utilize the increased volume and energy provided in the cracked component fuel flow 60. In this disclosed example, the turbo expander 72 drives a mechanical output in the form of a shaft 74 that drives an engine accessory device 76. The engine accessory device can be an oil pump, generator and/or hydraulic pump as well as any other accessory component utilized to support engine or aircraft operation. Because the cracked gas is less dense and has a higher specific heat capacity it can produce more work as enthalpy is extracted during turbo-expansion.

Furthermore, the cracking process changes the chemical composition of the ammonia fuel and thereby also changes its vapor-liquid equilibrium properties providing greater turbo-expansion of the cracked gas. As appreciated, for a given pressure, the saturation temperature, where vapor begins to condense to liquid, is much lower for $H_2$ and $N_2$ than it is for $NH_3$. As a result, the conversion of some or all of the $NH_3$ to $H_2$ and $N_2$ allows a larger temperature drop and more work extraction across the turbo-expander 72 without crossing the vapor-liquid equilibrium line than would be possible with pure $NH_3$ as the working fluid in the turbo-expander.

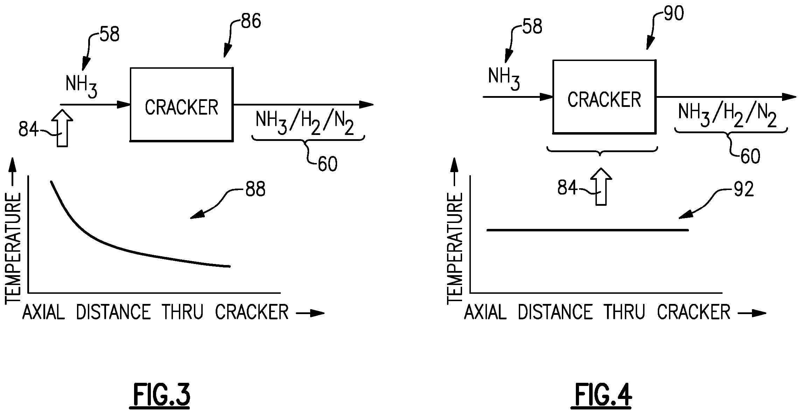

Thermal energy can be added to the ammonia fuel to aid cracking in different manners within the contemplation of this disclosure. Referring to Figure 3, in one disclosed example, thermal energy 84 is input into the ammonia fuel flow 58 prior to entering the cracker 86. Without further heat addition in the cracker, a temperature gradient of the fuel flow through the cracker assembly 86 decreases with an axial distance from the inlet of the cracker assembly 86 as endothermic cracking progresses, as shown by graph 88. Accordingly, the initial input temperature may be elevated to such a degree that the fuel achieves and maintains a minimum temperature upon being communicated away from the cracker assembly 86 as the component fuel flow 60.

Referring to Figure 4, thermal energy is input into the cracker assembly 90 to provide a constant temperature as shown by graph 92. In this example the cracker assembly 90 may be combined with a heat exchanger to provide more direct thermal communication between the heat source and the ammonia fuel flow.

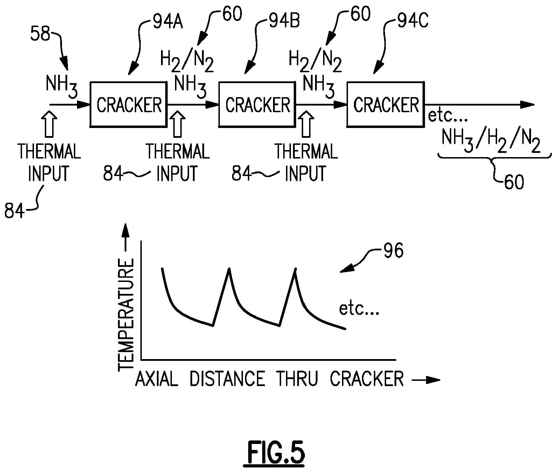

Referring to Figure 5, thermal energy is input into the ammonia fuel flow 58 and to component fuel flows 60 at intermediate locations between segmented cracker assemblies 94A, 94B and 94C. In this example, the different segmented cracker assemblies 94A, 94B and 94C allow different heat sources to be utilized to input heat into the ammonia fuel 58 and the component fuel flows 60. Moreover, the different fuel flows can be preferentially routed to vary thermal input into the fuel flow as needed to match cracking efficiencies with engine operation. Heat input between segmented cracker assemblies may also reduce the variation of temperature through the cracker (maximum to minimum) as compared to a single cracker unit as depicted in Figure 3 for example, which may be desirable if temperature limits or variation are of concern.

The disclosed engine and fuel system provide for the advantageous use of ammonia fuel to improve engine efficiency and reduce carbon emission. The disclosed systems use advantageous properties of components of an ammonia fuel to improve combustion performance and engine efficiencies.

Although an example embodiment has been disclosed, a worker of ordinary skill in this art would recognize that certain modifications would come within the scope of this disclosure. For that reason, the following claims should be studied to determine the scope and content of this disclosure.

**Claims**

1. A fuel system for a gas turbine engine, the fuel system comprising:

   a fuel storage device configured to store an ammonia fuel;
   a pump configured to increase a pressure of the ammonia flow to a pressure above 5 atm (74 psi);
   a thermal transfer device configured to heat the ammonia flow to a temperature above 500 °C (932 °F); and
   a cracking device configured for decomposing a portion of an ammonia flow into a flow containing more Hydrogen ($H_2$) and Nitrogen ($N_2$) than ammonia ($NH_3$) and communicating the flow containing more Hydrogen ($H_2$) and Nitrogen ($N_2$) than ammonia ($NH_3$) to a combustor.

2. The fuel system as recited in claim 1, wherein the pump increases a pressure of the ammonia flow communicated to the cracking device to between 5 atm (74 psi) and 300 atm (4410 psi).

**3.** The fuel system as recited in claim 1 or 2, wherein the thermal transfer device heats the ammonia to a temperature at a temperature between 500 °C (935 °F) and 700 °C (1292 °F).

**4.** The fuel system as recited in claim 1 or 2, wherein the thermal transfer device heats the ammonia flow to a temperature above 700 °C (1292 °F).

**5.** A gas turbine engine comprising:

a cracking device configured to decompose a portion of an ammonia flow into a flow of component parts of the ammonia flow;
a thermal transfer device configured to heat the ammonia flow to a temperature above 500 °C (932 °F);
a combustor configured to receive and combust the flow of component parts of the ammonia flow to generate a high energy gas flow;
a compressor section configured to supply compressed air to the combustor; and
a turbine section in flow communication with the high energy gas flow produced by the combustor and mechanically coupled to drive the compressor section.

**6.** The gas turbine engine as recited in claim 5, further comprising a pump configured to increase a pressure of the ammonia flow to a pressure above 5 atm (74 psi) at the cracking device.

**7.** The gas turbine engine as recited in claim 5 or 6, wherein the ammonia flow is communicated to the cracking device at a pressure between 5 atm (74 psi) and 300 atm (4410 psi), and/or

wherein the ammonia flow is heated to a temperature at a temperature between 500 °C (935 °F) and 700 °C (1292 °F), or
wherein the ammonia flow is heated to a temperature at a temperature above 700 °C (1292 °F), and/or
wherein the flow of component parts comprises Hydrogen (H2) and Nitrogen (N2).

**8.** The gas turbine engine as recited in any of claims 5 to 7, wherein the thermal transfer device comprises an exhaust heat exchanger providing thermal communication between the ammonia flow and exhaust heat from the turbine section.

**9.** The gas turbine engine as recited in any of claims 5 to 8, wherein the thermal transfer device comprises a compressor heat exchanger providing thermal communication between the ammonia flow and compressed air from a last stage of the compressor section,

wherein, optionally, the compressed air from a last stage of the compressor section that is in thermal communication with the ammonia is subsequently in thermal communication with the combustor to provide combustor cooling, and wherein, optionally, the compressed air from a last stage of the compressor section that is in thermal communication with the ammonia is subsequently in thermal communication with the turbine to provide combustor cooling.

**10.** The gas turbine engine as recited in any of claims 5 to 9, wherein the thermal transfer device comprises a compressor heat exchanger providing thermal communication between the ammonia flow and compressor air from an intermediate stage of the compressor section.

**11.** The gas turbine engine as recited in any of claims 5 to 10, wherein the thermal transfer device comprises a combustor heat exchanger providing thermal communication from cooling air after it has cooled the combustor, and/or

wherein the thermal transfer device comprises a combustor heat exchanger providing thermal communication from cooling air after it has cooled the turbine.

**12.** The gas turbine engine as recited in any of claims 5 to 11, wherein the thermal transfer device heats the ammonia flow prior to entering the cracking device, and/or

wherein the thermal transfer device heats the ammonia flow in the cracking device.

**13.** The gas turbine engine as recited in any of claims 5 to 12, further comprising a turboexpander receiving the ammonia flow and the flow of component parts from the cracker, wherein the ammonia flow and the flow of component parts are expanded through the turboexpander to drive a mechanical output.

**14.** A method of operating an energy extraction system, comprising:

raising a pressure of an ammonia flow to a pressure above 5 atm (74 psi);
heating the ammonia flow to a temperature above 500 °C (932 °F) with a thermal transfer device;
decomposing an ammonia fuel flow with a cracking device into a flow containing more Hydrogen ($H_2$) and Nitrogen ($N_2$) than ammonia ($NH_3$); and
communicating the flow containing more $H_2$ and $N_2$ to a combustor configured to generate a high energy gas flow.

**15.** The method as recited in claim 14, wherein the pressure is raised to between 5 atm (74 psi) and 300 atm (4410 psi), and/or

wherein the thermal transfer device heats the ammonia to a temperature between 500 °C (935 °F) and 700 °C (1292 °F), or
wherein the thermal transfer device heats the ammonia flow to a temperature above 700 °C (1292 °F).

**FIG.1**

FIG.2

EP 4 488 500 A2

FIG.3

FIG.4

EP 4 488 500 A2

FIG.5